# EUROPEAN PATENT APPLICATION

(11) **EP 2 559 780 A1**
(43) Date of publication of application: **20.02.2013**
(21) Application number: 11768742.6
(22) Date of filing: 04.04.2011
(51) Int. Cl.: C22C 23/02, B21D 53/88, B22D 19/14, B60R 19/03, C22F 1/06, C22C 23/00, C22C 23/04, C22C 23/06, C22F 1/00

(54) **IMPACT-RESISTANT MEMBER**

(30) Priority: 18.02.2011 JP 2011033946; 16.04.2010 JP 2010095247
(71) Applicant: Sumitomo Electric Industries, Ltd., Osaka-shi, Osaka 541-0041 (JP)
(72) Inventor: MORI, Koji, Itami-shi Hyogo 664-0016 (JP); OISHI, Yukihiro, Osaka-shi Osaka 554-0024 (JP); OKUDA, Nobuyuki, Itami-shi Hyogo 664-0016 (JP); NUMANO, Masatada, Itami-shi Hyogo 664-0016 (JP)
(74) Representative: Setna, Rohan P.
(86) International application number: PCT/JP2011/058538
(87) International publication number: WO 2011/129221

(57) **Abstract**

There is provided a lightweight, high strength impact-resistant component having a good impact energy absorptive property. The impact-resistant component is composed of a magnesium alloy containing Al in an amount of more than 7.3% by mass and 12% or less by mass. A rectangular test piece is produced from the impact-resistant component; an iron ball 30 having a mass of 225 g is allowed to freely fall toward a central portion of the test piece while both end portions of the test piece are fixed to supports 21 and 22; and, when a distance between a position from which the iron ball 30 is allowed to freely fall and the test piece is assumed to be a fall height, a fall height H at which a dent is not generated on the test piece by the iron ball 30 is measured. The impact-resistant component has a fall height H of more than 340 mm. In the impact-resistant component of the present invention, the fall height at which a dent is not generated is large. Therefore, the impact-resistant component of the present invention is not dented or is not easily dented even if an impact is applied and thus has high impact resistance.

## Description

### Technical Field

The present invention relates to an impact-resistant component that contributes to a reduction in impact energy in a collision. In particular, the present invention relates to a lightweight, high strength impact-resistant component having a good impact energy absorptive property.

### Background Art

One of characteristics required for various structural components is a reduction in impact energy of a dynamic load, that is, high impact resistance. An example of such components that need to have impact resistance (impact-resistant components) is parts of automobiles such as bumper modules.

In general, bumper modules for protecting passengers in an automobile by reducing impact energy generated when the automobile collides with another object are disposed on the front and rear of the automobile body. Such a bumper module includes a reinforcement (typically a pressed material of a steel sheet or an extruded material of aluminum) disposed in the width direction of an automobile body, an absorption component (typically styrofoam) that is supported by the reinforcement and absorbs impact energy in a collision through its deformation, and a bumper face (typically synthetic resin) that covers the reinforcement and the absorption component so as to form the exterior of the module.

Magnesium alloys, which are lightweight and have high specific strength and high specific rigidity, have been used as raw materials in various fields. Regarding parts of automobiles, a wheel cover and a paddle shift are exemplified. Since magnesium alloys generally have poor plastic formability at room temperature, components composed of a magnesium alloy are mainly made of a cast material (composed of an AZ91 alloy of the ASTM standard) obtained by a die casting process or a thixomolding process, and thus the parts of automobiles are also made of a cast material such as a die cast material. In recent years, components obtained by subjecting a sheet composed of a wrought magnesium alloy such as an AZ31 alloy of the ASTM standard to press forming have been used as small components such as housings of mobile electric and electronic devices. PTL 1 proposes a magnesium alloy sheet composed of an alloy equivalent to an AZ91 alloy of the ASTM standard and having good press formability.

### Citation List

### Patent Literature

PTL 1: Japanese Unexamined Patent Application Publication No. 2007-098470

### Summary of Invention

### Technical Problem

The impact resistance of impact-resistant components is desirably further improved.
In order to improve the reliability of protection of passengers and the safety of passengers, for example, the bumper module described above desirably has a larger impact energy absorption amount and higher impact resistance. Parts of automobiles are also desirably lightweight to improve the fuel efficiency.

It is believed that, to satisfy the requirements above, a magnesium alloy, which is lightweight and has high strength, is suitable as a material for impact-resistant components among structural metals. However, as a result of studies conducted by the inventors of the present invention, it has been found that a cast material of an AZ91 alloy or a rolled material of an AZ31 alloy does not provide sufficient impact resistance.

It is an object of the present invention to provide an impact-resistant component composed of a magnesium alloy and having high impact resistance. Solution to Problem

An impact-resistant component of the present invention includes a magnesium alloy containing Al in an amount of more than 7.3% by mass and 12% or less by mass, wherein when a fall height at which a dent is not generated is measured by performing an impact resistance test below, the fall height is more than 340 mm.

### (Impact resistance test)

A test piece having a thickness of 0.6 mm, a length of 100 mm, and a width of 70 mm is produced from the impact-resistant component; an iron ball having a mass of 225 g is allowed to freely fall toward a central portion of the test piece while both end portions of the test piece are fixed; and, when a distance between a position from which the iron ball is allowed to freely fall and the test piece is assumed to be a fall height (mm), a fall height at which a dent is not generated on the test piece by the iron ball is measured.

In the present invention, a thin test piece having a certain size is produced as described above, and a fall height obtained when the test piece is subjected to the certain impact resistance test is proposed as an indicator that quantitatively specifies impact resistance. When the fall height at which a dent is not generated on the test piece is large, specifically when the fall height is more than 340 mm, an evaluation of high impact resistance is given.

When the inventors of the present invention produced test pieces having the certain size from various metal sheets as shown in Test Examples described below and an iron ball having a certain mass was allowed to freely fall from various heights toward each of the test pieces, the fall height at which a dent is not generated was dependent on the test pieces. In particular, the test piece produced from a magnesium alloy sheet containing a certain amount of A1 had an extremely large fall height. Thus, the fall height is used as an indicator for evaluating the impact resistance.

The impact-resistant component of the present invention is not dented or is not easily dented even if an impact of a dynamic load (the free fall of an iron ball) is given to the thin test piece described above. As described in Test Examples below, the impact-resistant component is not easily dented and furthermore is not easily broken by an impact. This means that the impact-resistant component of the present invention has high impact resistance. A fall height of 340 mm or less means insufficient impact resistance, and thus it is believed that such an impact-resistant component is difficult to endure a strong impact. As the fall height increases, the impact energy absorptive property is improved, which means high impact resistance. Therefore, the upper limit of the fall height at which a dent is not generated is not provided.

In an embodiment of the present invention, grains of an intermetallic compound containing at least one of A1 and Mg are dispersed in the magnesium alloy; an average grain size of the grains of the intermetallic compound is 0.5 µm or less; and, in a cross section of the impact-resistant component, a total area percentage of the grains of the intermetallic compound is more than 0% and 11% or less.

The inventors have found that a magnesium alloy containing a certain amount of Al and having a certain microstructure has high impact resistance. In the above embodiment, the rigidity of the impact-resistant component itself composed of a magnesium alloy can be improved due to dispersion strengthening of the grains, the dispersion strengthening being achieved by dispersing the fine grains of the intermetallic compound. Therefore, even a thin test piece has high rigidity and is not easily dented as described above. Furthermore, in the above embodiment, a rather larger amount of A1 is contained and the intermetallic compound is present in a certain range (area percentage), whereby the state in which Al is sufficiently dissolved in a matrix phase can be maintained. Therefore, higher strength can be achieved through solution hardening of Al. In the above embodiment, coarse grains of an intermetallic compound from which cracks are formed in a collision are substantially not present. Therefore, the impact-resistant component according to the above embodiment of the present invention is not easily dented or broken even if an impact is applied and thus has high rigidity and impact resistance.

The impact-resistant component according to the above embodiment that is composed of a magnesium alloy having the certain microstructure has high corrosion resistance because fine grains of an intermetallic compound having corrosion resistance higher than that of a base material (matrix phase) of the magnesium alloy are present in at least a surface region (a region of up to 30% of thickness from the surface of an impact-resistant component in the thickness direction of the impact-resistant component; for example, when the impact-resistant component is a formed component formed by subjecting a sheet to plastic forming, the surface region is a region of up to 30% of the sheet thickness from the surface of the sheet in the sheet thickness direction) of the impact-resistant component of the present invention. In particular, when the intermetallic compound is present in a certain range (area percentage), Al can be sufficiently dissolved also in a matrix phase. Therefore, the degradation of the corrosion resistance of the matrix phase itself, the degradation being caused by employing Al as the intermetallic compound, can be suppressed. Also from this point of view, the impact-resistant component of the above embodiment has high corrosion resistance.

A representative embodiment of the impact-resistant component of the present invention having the certain microstructure is an embodiment in which an oxide film having a uniform thickness is formed over substantially the entire surface of the impact-resistant component. In such an embodiment, high corrosion resistance can be achieved because contact of corrosion factors such as air and water with the magnesium alloy itself can be effectively suppressed. Therefore, in this embodiment, high corrosion resistance is achieved even if the impact-resistant component is composed of a magnesium alloy, which generally has low corrosion resistance. Thus, it is expected that such a component can be sufficiently used as, for example, even exterior components of parts of automobiles that are exposed to a corrosion environment such as wind and rain. In this embodiment, since the degradation of impact resistance due to corrosion can be reduced, it is also expected that high impact resistance can be maintained over a long period of time.

In the embodiment in which the impact-resistant component has the certain microstructure, the number of the grains of the intermetallic compound is 0.1 /µm² or more in the cross section of the impact-resistant component.

In the above embodiment, many fine grains of the intermetallic compound are present and are uniformly dispersed in a matrix phase, and thus higher impact resistance can be achieved due to dispersion strengthening of the grains and furthermore the corrosion resistance can be improved. The number of the grains is preferably 0.3 /µm² or more. However, if the number of coarse grains of the intermetallic compound is excessively large, the Al concentration in the matrix phase is decreased as described above, which degrades the strength and corrosion resistance. Therefore, the size of the grains of the intermetallic compound is desirably small as described above.

In an embodiment of the present invention, the impact-resistant component is a formed component formed by subjecting a sheet composed of the magnesium alloy to plastic forming and have a flat portion that is not subjected to drawing. In this embodiment, the test piece is cut out from the flat portion.

The above embodiment is suitable for mass production because the impact-resistant component can be formed by plastic forming such as press forming. In particular, the inventors have found that, when the sheet is composed of a magnesium alloy having the certain microstructure in which the fine grains of the intermetallic compound are dispersed, good plastic formability such as good press formability is achieved. Therefore, it is expected that, by subjecting such a sheet to plastic forming such as press forming, a lightweight, high strength impact-resistant component having high impact resistance can be produced with high productivity.

The flat portion that is not subjected to drawing is defined as follows. That is, a portion having an area large enough to form the test piece is cut out from an impact-resistant component to prepare a cut piece and the cut piece is placed on a horizontal table. With regard to the cut piece surface that is in contact with the horizontal table, the distance in the vertical direction between the horizontal table and a portion of the cut piece situated farthest from the horizontal table is measured. The flat portion that is not subjected to drawing is a portion in which the distance is 1 mm or less. If the test piece is prepared from the flat portion, the test piece is also flat (the distance is 1 mm or less). When the impact-resistant component has the flat portion, the area and number of grains of the intermetallic compound and the maximum diameter of cavities described below are measured by taking a cross section of the flat portion.

In an embodiment of the present invention, the maximum diameter of a cavity is 5 µm or less in the cross section of the impact-resistant component.

In cast materials such as die cast materials, casting defects called cavities (pores) are easily formed. By performing plastic forming such as rolling on a cast material having cavities, the cavities can be eliminated or the size of the cavities can be decreased. However, if plastic forming is not performed, such cavities are not eliminated. When coarse cavities having a maximum diameter of more than 5 µm are present, particularly when such cavities are exposed to the surface of a magnesium alloy component (impact-resistant component), cracking may be caused from the cavities and it is difficult to sufficiently absorb impact energy. Furthermore, corrosion is also easily caused from the coarse cavities, which decreases the corrosion resistance. In contrast, in the above embodiment, the number of coarse cavities is small or coarse cavities are substantially not present. Therefore, cracking due to coarse cavities is not easily caused and thus high impact resistance is achieved. Furthermore, a decrease in the corrosion resistance due to coarse cavities is also not easily caused and thus high corrosion resistance is achieved. The size of cavities is preferably as small as possible, and most preferably the cavities are not present. The lower limit is not provided in terms of the number and maximum diameter of cavities. An impact-resistant component including a small number of cavities or substantially no cavities is, for example, produced by using, as a raw material, a rolled sheet obtained by subjecting a cast sheet (preferably a continuous cast sheet) to rolling as described below.

In an embodiment of the present invention, the magnesium alloy contains 8.3% or more by mass and 9.5% or less by mass of A1 and 0.5% or more by mass and 1.5% or less by mass of Zn.

Since a Mg-Al series alloy containing 8.3% to 9.5% by mass of A1 and 0.5% to 1.5% by mass of Zn has high strength, such a Mg-Al series alloy is preferably used as a material for impact-resistant components that need to have high strength. A representative example of the Mg-Al series alloy is an AZ91 alloy of the ASTM standard.

In an embodiment of the present invention, the impact-resistant component is a bumper component.

Since the impact-resistant component of the present invention can sufficiently reduce impact energy, the impact-resistant component can be suitably used as a bumper component of automobiles, which particularly requires impact resistance, such as a reinforcement or a bumper face.

### Advantageous Effects of Invention

The impact-resistant component of the present invention has high impact resistance.

### Brief Description of Drawing

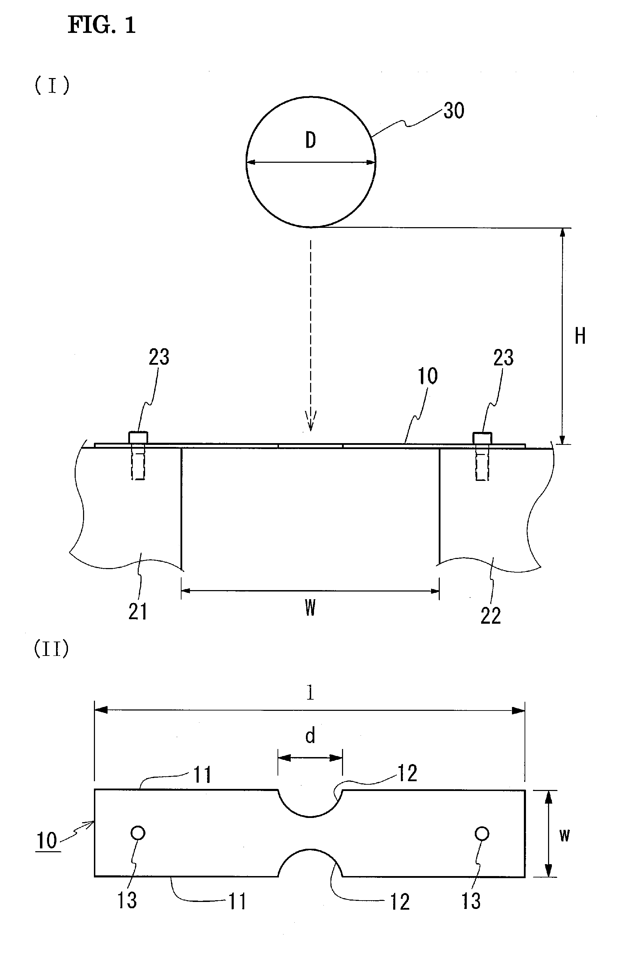

[Fig. 1] Figure 1(I) is a diagram for describing a test method of an impact resistance test and Fig. 1(II) is a plan view of a test piece used in a breaking test. Description of Embodiments

The present invention will now be described in detail.

### [Impact-resistant component]

### (Composition)

Examples of a magnesium alloy constituting the impact-resistant component of the present invention include various magnesium alloys having a composition including Mg and additive elements (Mg: 50% or more by mass, additive elements, and balance: impurities). In particular, in the present invention, a Mg-Al series alloy containing at least Al as the additive elements in an amount of more than 7.3% by mass and 12% or less by mass is employed. As the content of A1 increases, the mechanical properties such as strength and plastic deformation resistance (rigidity) are improved and the corrosion resistance also tends to become high. However, if the content of A1 is more than 12% by mass, the plastic formability degrades. Thus, the upper limit of the content of A1 is 12% by mass and preferably 11% by mass.

At least one element selected from Zn, Mn, Si, Ca, Sr, Y, Cu, Ag, Zr, Ce, Be, Sn, Li, Ni, Au, and rare-earth elements (except for Y and Ce) is exemplified as the additive elements other than Al. When these elements are contained, the total content of the elements is preferably 10% or less by mass and more preferably 5% or less by mass. The content of each element is preferably 0.01% or more by mass and 10% or less by mass and more preferably 0.1% or more by mass and 5% or less by mass. Specific examples of the Mg-Al series alloy include AZ series alloys (Mg-Al-Zn series alloys, Zn: 0.2% to 1.5% by mass), AM series alloys (Mg-Al-Mn series alloys, Mn: 0.15% to 0.5% by mass), Mg-Al-RE (rare-earth element) series alloys, AX series alloys (Mg-Al-Ca series alloys, Ca: 0.2% to 6.0% by mass), and AJ series alloys (Mg-Al-Sr series alloys, Sr: 0.2% to 7.0% by mass) of the ASTM standard. An example of the impurities is Fe. In addition, when at least one element selected from Y, Ce, Ca, and rare-earth elements (except for Y and Ce) is contained in a total amount of 0.001 % or more by mass and preferably in a total amount of 0.1% or more by mass and 5% or less by mass, higher heat resistance and flame resistance are achieved.

### (Microstructure)

### «Composition»

A typical microstructure of the magnesium alloy constituting the impact-resistant component of the present invention is a microstructure in which fine grains of a precipitate are dispersed in a matrix phase in a certain range. An example of the precipitate is mainly an intermetallic compound. Examples of the intermetallic compound include a compound containing Mg and Al, such as Mg₁₇Al₁₂, and a compound containing Al, such as Al(MnFe).

### «Average grain size, Area percentage»

The term "fine grains" means grains having an average grain size of 0.5 µm or less. The term "microstructure in which fine grains are dispersed" means that, when the cross section of the impact-resistant component of the present invention is assumed to have 100 area%, 11 area% or less of the grains of the intermetallic compound are present in total. When the area percentage is more than 0 area%, the intermetallic compound is sufficiently present in the magnesium alloy. In addition, when the average grain size is 0.5 µm or less, a dispersion strengthening effect due to the dispersion of fine grains of an intermetallic compound is sufficiently produced. If the average grain size or area percentage is excessively large, an excessive amount of intermetallic compound is present in the magnesium alloy or coarse grains having a size of 5 µm or more are present in the magnesium alloy. As a result, the amount of Al dissolved in a matrix phase (Al concentration) is decreased and thus the strength is decreased. Furthermore, cracks or the like are formed from such coarse grains in a collision, which degrades the impact resistance. Moreover, if coarse grains of an intermetallic compound are sparsely present in a matrix phase, a local cell is formed between the coarse grains and the matrix phase, which easily causes corrosion such as pitting corrosion. Therefore, preferably, the grain size of the intermetallic compound is as small as possible and the small grains are uniformly dispersed. The average grain size is preferably 0.3 µm or less. It is believed that the area percentage is preferably 8 area% or less.

### (Oxide film)

A magnesium alloy is an active metal, and thus an oxide film is formed on the surface of the magnesium alloy if an anti-corrosion treatment or coating is not performed. In a cast material such as a die cast material, such an oxide film is unevenly formed and such a cast material has low corrosion resistance. In contrast, in the embodiment of the present invention in which an oxide film having a uniform thickness is formed over substantially the entire surface, high corrosion resistance is achieved. The term "substantially the entire surface" means a region except for a portion in which an oxide film cannot be precisely confirmed due to, for example, the measurement limit of a test apparatus, the region being 90% or more and particularly 95% or more of the surface area. The oxide film is substantially formed of magnesium oxide (90% or more by mass), but may contain impurities such as Al.

### (Thickness)

In the case where the impact-resistant component of the present invention is a formed component formed by subjecting a raw material sheet (typically a rolled sheet) to plastic forming such as press forming so that the raw material sheet is formed into a predetermined shape, the thickness of the raw material sheet is substantially maintained. Thus, the entire impact-resistant component has a substantially uniform thickness. As the thickness of the impact-resistant component increases, the amount of impact energy absorbed increases, but the weight of the impact-resistant component increases. If the thickness is excessively small, impact energy cannot be sufficiently absorbed. Therefore, the average thickness of the impact-resistant component is preferably 0.6 mm or more and 3.0 mm or less. The average thickness is an average of thicknesses at five points arbitrarily selected from an impact-resistant component. The impact-resistant component of the present invention may have a substantially uniform thickness over its entirety or may include ribs and through-holes and thus may locally have portions having different thicknesses.

### (Surface treatment)

In an embodiment of the present invention, an anti-corrosion treatment is not performed on both sides (e.g., in the case of a formed component obtained by subjecting a sheet to plastic forming, both surfaces of the sheet) of the impact-resistant component. In this embodiment, an anti-corrosion treatment that has been an essential treatment can be skipped, and the productivity of the impact-resistant component can be increased. In another embodiment of the present invention, an anti-corrosion treatment is not performed on both sides of the impact-resistant component and a coating layer is formed on only one of the sides. In this embodiment, by forming a coating layer on one of the sides, the corrosion resistance of the impact-resistant component can be reinforced. Furthermore, colors and patterns can be provided and thus the design and commercial value can be improved.

In another embodiment of the present invention, an anti-corrosion treatment such as a chemical conversion treatment or anodic oxidation is performed on both sides of the impact-resistant component (an anti-corrosive layer is formed). In another embodiment of the present invention, a coating layer is further formed in addition to the anti-corrosive layer. In these embodiments, corrosion resistance provided by performing an anti-corrosion treatment is added to the corrosion resistance of the magnesium alloy itself that constitutes the impact-resistant component. As a result, an impact-resistant component having extremely high corrosion resistance can be obtained.

### [Production method]

When the impact-resistant component of the present invention is a formed component obtained by subjecting a sheet to plastic forming, the impact-resistant component can be produced by a production method that includes a casting step, a solution treatment step, a rolling step, and a pressing step described below.
Casting step: a step of producing a cast sheet composed of a magnesium alloy containing more than 7.3% by mass and 12% or less by mass of A1 by a continuous casting process.
Solution treatment step: a step of subjecting the cast sheet to a solution treatment at a temperature of 350°C or more to produce a solution-treated sheet.
Rolling step: a step of subjecting the solution-treated sheet to warm rolling to produce a rolled sheet.
Pressing step: a step of subjecting the rolled sheet to press forming to produce an impact-resistant component.
In particular, in the solution treatment step and the subsequent steps, the heat history of a raw material sheet (typically a rolled sheet) to be processed is controlled so that the total time for which the raw material sheet is held in a temperature range of 150°C or more and 300°C or less is 0.5 hours or more and 12 hours or less while the raw material sheet is not heated to more than 300°C.

The production method described above may further include a leveling step of leveling the rolled sheet. An example of the leveling is warm leveling that is performed while the rolled sheet is heated to 100°C or more and 300°C or less. When the warm leveling is performed, the time for which the rolled sheet is held in a temperature range of 150°C or more and 300°C or less in the leveling step is included in the total time described above. The production method may further include a grinding step of polishing the rolled sheet or the leveled sheet obtained after the leveling step.

As described above, in the production steps until an end product is made after the casting step, particularly after the solution treatment step, the time for which a raw material composed of a magnesium alloy is held in a temperature range (150°C to 300°C) in which an intermetallic compound is easily precipitated is set in a predetermined range and also the raw material is not heated to a temperature of more than 300°C after the solution treatment step. Consequently, a precipitate such as an intermetallic compound can be precipitated while the amount of the precipitate is controlled to be in a predetermined range. Furthermore, by controlling the time for which the raw material is held in the above temperature range, excessive growth of a precipitate such as an intermetallic compound can be suppressed and thus a microstructure in which fine grains of the precipitate are dispersed can be formed.

Hereinafter, each of the steps will be described in detail.

### (Casting step)

The cast sheet described above is preferably a cast sheet produced by a continuous casting process such as a twin-roll process, particularly by a casting process disclosed in WO/2006/003899. Since the continuous casting process allows rapid solidification, the formation of oxides and segregation can be reduced, and formation of coarse impurities in crystal and precipitated impurities which have a size of more than 10 µm and from which cracks are formed can be suppressed. Thus, a cast sheet having good roll formability is produced. The thickness of the cast sheet is not particularly limited. However, if the thickness is excessively large, segregation readily occurs. The segregation causes cracking during rolling or the like, and thus the thickness is preferably 10 mm or less and particularly preferably 5 mm or less. The width of the cast sheet can be suitably selected.

### (Solution treatment step)

By subjecting the cast sheet to a solution treatment, a solution-treated sheet having a homogeneous composition and including additive elements such as Al dissolved therein is produced. The solution treatment is preferably performed at a holding temperature of 350°C or more, particularly at a holding temperature of 380°C to 420°C, for a holding time of 60 to 2400 minutes (1 to 40 hours). As the content of A1 increases, the holding time is preferably increased. In a cooling step performed from the holding temperature, the cooling rate is preferably increased by using forced cooling such as water cooling or air blast cooling (e.g., 50 °C/min or more) because the precipitation of a coarse precipitate can be suppressed. By performing the solution treatment described above, Al can be sufficiently dissolved in the magnesium alloy.

### (Rolling step)

When the solution-treated sheet is rolled, the plastic formability (roll formability) can be improved by heating the raw material (a solution-treated sheet or a sheet being subjected to rolling before final rolling). Therefore, at least one pass is performed by warm rolling. In particular, when the raw material is heated to more than 300°C, the plastic formability is sufficiently increased and thus rolling is easily performed. However, as described above, impact resistance and corrosion resistance are decreased due to excessive formation and coarsening of an intermetallic compound (precipitate), seizing of a raw material is caused, and the mechanical properties of a sheet obtained after the rolling are degraded due to coarsening of crystal grains of a raw material. Therefore, the heating temperature of the raw material is set to be 300°C or less in the rolling step. The heating temperature is preferably 150°C or more and 280°C or less. By performing rolling multiple times (multiple passes), a desired sheet thickness (e.g., 0.6 to 3.0 mm) is achieved, the average crystal grain size (e.g., 10 µm or less and preferably 5 µm or less) of the raw material is decreased, and plastic formability such as roll formability or press formability is improved. The rolling may be performed under publicly known conditions. For example, a reduction roll may also be heated together with the raw material. The rolling may also be combined with the controlled rolling disclosed in PTL 1. When rolling with a low reduction ratio is performed in finish rolling or the like, cold rolling may be employed. Furthermore, if a lubricant is suitably used during the rolling, the frictional resistance during the rolling can be reduced and the seizing of the raw material can be prevented. Consequently, rolling is easily performed.

In the case where rolling is performed with multiple passes, an intermediate heat treatment may be performed between passes so long as the time for which the raw material is held in a temperature range of 150°C to 300°C is included in the total time. By performing the intermediate heat treatment, the strain, residual stress, aggregation texture, and the like introduced into the raw material by plastic forming (mainly rolling) before the intermediate heat treatment can be removed or reduced. As a result, unwanted cracking, strain, and deformation are prevented in the rolling after the intermediate heat treatment, and rolling is performed more smoothly. In the case where the intermediate heat treatment is performed, the heating temperature of the raw material is 300°C or less and preferably 250°C or more and 280°C or less.

### (Leveling step)

The rolled sheet produced in the rolling step may be subjected to a final heat treatment (final annealing) as disclosed in PTL 1. However, leveling is preferably performed as described above without the final heat treatment or after the final heat treatment because plastic formability such as press formability is improved. An example of the leveling is warm rolling that is performed by using a roll leveler including a plurality of rolls arranged in a staggered manner, the roll leveler being disclosed in WO/2009/001516, and by heating the rolled sheet to 100°C to 300°C and preferably 150°C or more and 280°C or less. When the leveled sheet that has been subjected to such warm leveling is subjected to plastic forming such as press forming, dynamic recrystallization occurs during the plastic forming and thus the plastic formability is improved. The holding time in the above-described temperature range in the warm leveling step depends on the thickness of a raw material to be subjected to warm leveling. If the thickness of the raw material is small, the holding time can be extremely shortened to about several minutes or less than one minute.

When the final heat treatment is performed, the strain generated in the rolling can be removed. The final heat treatment may be performed under the conditions that the heating temperature of a raw material is 100°C or more and 300°C or less and the heating time is 5 minutes or more and 60 minutes or less. The heating temperature can be set to 300°C to 340°C as disclosed in PTL 1. However, when the heating temperature is increased, the heating time is desirably shortened in order to suppress the growth of the intermetallic compound as much as possible. In this case, the heating time is desirably less than 30 minutes.

### (Total time for which raw material is held in certain temperature range)

As described above, the holding time in the temperature range (150°C to 300°C) in which an intermetallic compound is easily formed or grown is controlled in a predetermined range, whereby a microstructure in which fine grains of the intermetallic compound are dispersed in a predetermined amount can be formed.

If the total time for which the raw material is held in a temperature range of 150°C to 300°C is less than 0.5 hours, the intermetallic compound is not sufficiently precipitated. If the total time is more than 12 hours or the raw material is rolled at more than 300°C, a microstructure in which coarse grains of the intermetallic compound having an average grain size of 1 µm or more are present or a microstructure in which the intermetallic compound is excessively present, for example, in more than 11 area% is formed. Preferably, for example, the reduction ratio of each pass in the rolling step, the total reduction ratio in the rolling step, the conditions of the intermediate and final heat treatments, and the conditions of the leveling are controlled so that the temperature range is 150°C or more and 280°C or less and the total time is one hour or more and six hours or less. As the content of Al increases, the intermetallic compound easily precipitates. Therefore, the total time is preferably adjusted in accordance with the content of Al.

### (Pressing step)

The impact-resistant component (formed component) of the present invention is produced by performing plastic forming such as press forming on the rolled sheet, a heat-treated sheet obtained by subjecting the rolled sheet to the final heat treatment, a leveled sheet obtained by subjecting the rolled sheet to the leveling, or a polished sheet obtained by subjecting one of the rolled sheet, heat-treated sheet, and leveled sheet to polishing (preferably wet polishing). When the plastic forming is warm forming at 200°C or more and 300°C or less, the plastic formability of the raw material is improved and the plastic forming is easily performed. The time for which the raw material is held at 200°C to 300°C in this plastic forming is extremely short. For example, the time is sometimes within 60 seconds depending on press forming performed. Therefore, in this pressing step, it is believed that the above-described problem such as coarsening of an intermetallic compound substantially does not occur.

By performing a heat treatment after the plastic forming, the strain and residual stress introduced by the plastic forming can be removed and the mechanical properties can be improved. In this heat treatment, the heating temperature is 100°C to 300°C and the heating time is about 5 minutes to 60 minutes. Note that, also in this heat treatment, the time for which the raw material is held in a temperature range of 150°C to 300°C is desirably included in the total time.

In addition, an anti-corrosion treatment may be performed after the plastic forming. As described above, a coating layer may also be formed in order to improve the corrosion resistance, provide the mechanical protection, and improve the design (commercial value).

### (Configuration of raw material)

In the production of the impact-resistant component of the present invention, which is the formed component described above, when a coil stock is used as the raw material, the raw material can be continuously supplied to a press forming apparatus. This allows mass production and thus has high industrial significance. The coil stock can be produced by, for example, coiling a long cast sheet continuously made by a continuous casting process as described above to produce a cast coil stock, subjecting the cast coil stock to a solution treatment (batch process or continuous process), performing uncoiling, performing rolling and leveling, and performing coiling. In the production of the cast coil stock, a cast material is coiled while the start-of-coiling portion of the cast material is heated to, for example, 150°C or more, whereby the cast material can be coiled without forming cracks even if the coiling diameter is small. In the case where the coiling diameter is large, the cast material may be coiled through a cold coiling process.

A specific embodiment of the present invention will now be described based on Test Examples.

### [Test Examples]

The impact resistance and microstructure of various metal sheets were investigated.

In this test, there were prepared a sheet (Sample No. 1) composed of a magnesium alloy and produced by the method below, a commercially available aluminum alloy sheet (5052, Sample No. 100, thickness: 0.6 mm) for comparison, a commercially available stainless steel sheet (SUS304, Sample No. 110, thickness: 0.6 mm) for comparison, a commercially available wrought sheet (AZ31 alloy, Sample No. 120, thickness: 0.6 mm) for comparison, and a commercially available cast sheet (AZ91 alloy) for comparison. The cast sheet (AZ91 alloy) was subjected to wet polishing under the same polishing conditions as those of Sample No. 1 described below to produce a polished sheet. The polished sheet (thickness: 0.6 mm) was referred to as Sample No. 130.

The sheet of Sample No. 1 was produced as follows. A long cast sheet (thickness: 4 mm) prepared by a twin-roll continuous casting process using a molten metal composed of a magnesium alloy having a composition equivalent to that of AZ91 alloy (9.0% Al-1.0% Zn-0.15% to 0.5% Mn (mass%), the balance: Mg) was coiled to produce a cast coil stock. The cast coil stock was inserted into a batch furnace to perform a solution treatment at 400°C for 24 hours. The solution-treated coil stock was uncoiled. The uncoiled sheet was rolled with multiple passes under the conditions below and then coiled to produce a rolled coil stock having a thickness of about 0.6 mm.

### (Rolling conditions)

Reduction ratio: 5 to 40 %/pass
Heating temperature of raw material: 250°C to 280°C
Roll temperature: 100°C to 250°C

The rolled coil stock was uncoiled, and the raw material sheet was subjected to warm leveling while being heated to 200°C and coiled to produce a leveled coil stock. The warm leveling was performed using a roll leveler equipped with a heating furnace that can heat a raw material sheet (rolled sheet) and a roll unit including a plurality of rolls that continuously impart bending (strain) to the heated raw material sheet. The roll unit included a plurality of rolls arranged in a staggered manner so as to face each other in the vertical direction. In the roll leveler, the raw material sheet was transferred to the roll unit while being heated in the heating furnace, and bending was imparted to the raw material sheet each time the raw material sheet passed through a portion between the rolls arranged in the vertical direction.

The leveled coil stock was uncoiled, and the surface of the raw material (leveled sheet) was subjected to wet belt polishing using a #600 polishing belt to smooth the surface. The raw material was coiled to produce a polished coil stock (thickness: 0.6 mm). The polished coil stock was referred to as Sample No. 1. In the production process of Sample No. 1 after the solution treatment step, the total time for which the raw material was held in a temperature range of 150°C to 300°C was 0.5 to 12 hours and the raw material was not heated to more than 300°C.

### <Impact resistance>

### [Dent test]

A rectangular test piece having a thickness of 0.6 mm, a length 1 of 100 mm, and a width w of 70 mm was produced from each of the prepared sheets. The following impact resistance test was performed to evaluate the impact resistance.

The test piece was prepared by cutting each of the sheets into a small rectangular piece. Holes for fixing were made in both end portions of the piece. The test piece was placed on a pair of separately arranged supports (distance W: 76 mm) so as to work as a bridge between the supports. A bolt was screwed into each of the holes to fix the test piece on the supports. Thus, the test piece was held by the supports at both end portions thereof. In this state, an iron ball (mass: 225 g, diameter D: 38 mm) was allowed to freely fall from above the surface of the test piece in the vertical direction so as to hit the central portion of the test piece. The distance between the position from which the iron ball was allowed to freely fall and the surface of the test piece was defined as a fall height H. The fall height H at which a dent is not generated on the test piece was measured. Table I shows the results. The presence or absence of a dent was confirmed through visual inspection.

**[Table I]**

| Sample No. | Material | Fall height (mm) |
|---|---|---|
| 100 | A5052 | 110 mm |
| 110 | SUS304 | 325 mm |
| 120 | AZ31 | 215 mm |
| 130 | AZ91 (cast sheet) | 340 mm |
| 1 | AZ91 | 360 mm |

As is clear from Table I, in the impact resistance test, the fall height of Sample No. 1 whose test piece was prepared using a rolled coil stock (rolled sheet) composed of a magnesium alloy having a high Al content was greater than that of Sample No. 110 whose test piece was prepared using a stainless steel sheet. Although Sample No. 1 and Sample No. 130 had the same composition, the fall height of Sample No. 1 was greater than that of Sample No. 130 whose test piece was prepared using a cast sheet. It is found from the results above that Sample No. 1 is not dented even if an impact is applied to some extent and thus has high impact resistance.

### [Breaking test]

A test piece 10 shown in Fig. 1(II) was prepared and a breaking test was performed. Specifically, the test piece 10 had a rectangular shape having a thickness of 0.6 mm, a length 1 of 100 mm, and a width w of 70 mm. On each of edges 11 of the long sides, a semicircular cutout 12 (diameter d: 7.5 mm) was formed at the central portion in the longitudinal direction. In addition, holes 13 for fixing were made in both end portions of the test piece 10. As shown in Fig. 1(I), the test piece 10 was placed on a pair of separately arranged supports 21 and 22 (distance W: 76 mm) so as to work as a bridge between the supports 21 and 22. A bolt 23 was screwed into each of the holes 13 to fix the test piece 10 on the supports 21 and 22. Thus, the test piece 10 was held by the supports 21 and 22 at both end portions thereof. In this state, an iron ball 30 (mass: 225 g, diameter D: 38 mm) was allowed to freely fall from above the surface of the test piece 10 in the vertical direction so as to hit the central portion of the test piece 10 at which the semicircular cutout 12 was formed. The fall height H (the distance between the position from which the iron ball 30 is allowed to freely fall and the surface of the test piece 10) at which the test piece 10 is broken due to the collision with the iron ball 30 was measured. As a result, when the fall height H was 900 mm, the test piece of Sample No. 130 was broken, but the test piece of Sample No. 1 was not broken. As is clear from the above results, Sample No. 1 has high impact resistance.

### <Observation of microstructure>

Subsequently, the microstructures of the prepared magnesium alloy sheets were observed.
Cross sections in a surface-layer region (a region of up to 30% of the sheet thickness from the surface of a sheet in the sheet thickness direction) of each of the polished coil stock of Sample No. 1 and the polished cast sheet of Sample No. 130 for comparison were arbitrarily taken. Each of the cross sections was observed with a scanning electron microscope (SEM) to measure the average grain size (µm) of grains of an intermetallic compound, the total area percentage (%) of grains of an intermetallic compound, the number of grains (/µm²) of an intermetallic compound, and the maximum diameter (µm) of cavities. Table II shows the results. In addition, the average distance (µm) between adjacent grains of an intermetallic compound and the circularity coefficient of grains of an intermetallic compound were measured. Table II also shows the results. Furthermore, a salt corrosion test was performed on Sample No. 1 and Sample No. 130 to measure the corrosion weight loss (µg/cm²) in the test. Table II also shows the results.

The average grain size of grains of an intermetallic compound was measured as follows. Five cross sections (cross sections in a surface-layer region described above) for each of Samples were taken in the sheet thickness direction, and three fields of view (herein a region having a size of 22.7 µm × 17 µm) were arbitrarily taken from an observation image of each of the cross sections. For each of observation fields, the equivalent circle diameter of each grain (the diameter of a circle having an area equivalent to that of the grain) that was present in a single observation field was measured. A value obtained by dividing the sum of the equivalent circle diameters by the number of grains in a single observation field ((sum of equivalent circle diameters)/(total number of grains)) was defined as the average grain size of grains in the observation field. Table II shows an average of the average grain sizes of grains in 15 observation fields for each of Samples.

The total area percentage of grains of an intermetallic compound was measured as follows. Observation fields were taken as described above. For each of the observation fields, the areas of all grains that were present in a single observation field were measured to calculate the total area. A value obtained by dividing the total area by an area of a single observation field (herein 385.9 µm²) ((total area of grains)/(area of observation field)) was defined as the area percentage of grains in the observation field. Table II shows an average of the area percentages of grains in 15 observation fields for each of Samples.

The number of grains of an intermetallic compound was measured as follows. Observation fields were taken as described above. For each of the observation fields, the total number of grains in a single observation field was measured. A value obtained by dividing the total number by an area of a single observation field (herein 385.9 µm²) ((total number of grains)/(area of observation field)) was defined as the number of grains in the observation field. Table II shows an average of the numbers of grains in 15 observation fields for each of Samples.

The average distance between grains of an intermetallic compound was measured as follows. Observation fields were taken as described above. For each of the observation fields, an average area of a single grain ((total area of grains)/(total number of grains)) was determined from the total area and total number of all grains that were present in a single observation field. A value obtained by dividing the total area of all grains by the average area was defined as the number of grains in the observation field. The number of grains per unit area was determined by dividing the number of grains in the observation field by the area of the observation field (herein 385.9 µm²). The square root of the number of grains per unit area was defined as the number of grains per unit distance. The reciprocal of the number of grains per unit distance was defined as the average distance between grains in the observation field. Table II shows an average of the average distances between grains in 15 observation fields for each of Samples.

The circularity coefficient of grains of an intermetallic compound was measured as follows. Observation fields were taken as described above. For each of the observation fields, the area and circumference of each of grains that were present in a single observation field were measured. The circularity coefficient of each of the grains was calculated from the formula: Circularity coefficient = 4π × area/(circumference)². The average of the circularity coefficients of all grains was defined as the circularity coefficient of grains in the observation field. Table II shows an average of the circularity coefficients of grains in 15 observation fields for each of Samples.

The maximum diameter of cavities was measured as follows. Observation fields were taken as described above. For each of the observation fields, cavities in a single observation field were confirmed through visual inspection. When cavities were present, the largest diameter of each cavity (the length of the longest line segment that connects any two points in a cavity) was determined. The maximum value among the largest diameters was defined as the maximum diameter of cavities in the observation field. Table II shows an average of the maximum diameters of cavities in 15 observation fields for each of Samples.

The parameters concerning grains of an intermetallic compound, such as the average grain size, and the maximum diameter of cavities can be easily calculated by using a commercially available image processing apparatus. The composition of the grains was measured using EDS (energy dispersive X-ray spectrometer), and it was found that the grains constituted an intermetallic compound containing Al and Mg, such as Mg₁₇Al₁₂ or Al(Mn Fe). The presence of the intermetallic compound can also be determined by measuring the composition and structure using X-ray diffraction or the like. By performing EDS analysis or the like on the cross section of a sample, the compositions of substances that are present on the surface of the magnesium alloy sheet can be measured. In Sample No. 1 and Sample No. 130, it was confirmed that there was an oxide film on the surface of each of the sheets composed of a magnesium alloy, and the oxide film was mainly formed of magnesium oxide. The oxide film of Sample No. 1 had a uniform thickness.

The corrosion weight loss was measured by performing, as the salt corrosion test, a salt-spray test in conformity with JIS H 8502 (1999). A test piece for a corrosion test was separately prepared using the sheet polished as described above. After the mass (initial value) of the test piece was measured, an unnecessary portion of the test piece was masked so that a test surface having the predetermined size was exposed on the test piece. The masked test piece was inserted into corrosion test equipment and set so as to lean at the predetermined angle with respect to the bottom of the equipment (herein the angle between the bottom of the equipment and the test piece was 70° to 80°). The test piece was held for the predetermined time (herein 96 hours) while a test liquid (5 mass% aqueous NaCl solution, temperature: 35 ± 2°) was being sprayed onto the test piece. After the predetermined time passed, the test piece was taken out of the corrosion test equipment and the mask was removed. Then, a corrosion product generated on the test piece was removed by being dissolved using chromic acid in conformity with a method described in Reference Table 1 of JIS Z 2371 (2000). The mass of the test piece after the corrosion product was removed was measured. A value obtained by dividing the difference between the mass and the initial value by the area of the test surface of the test piece was defined as the corrosion weight loss (µg/cm²).

**[Table II]**

| Sample No. | 1 | 130 |
|---|---|---|
| Average grain size (µm) | 0.27 | 0.95 |
| Area percentage (%) | 10.59 | 4.58 |
| Number of grains (/µm²) | 1.4 | 0.03 |
| Maximum diameter of cavities (µm) | < 1 | 23 |
| Average distance (µm) | 0.85 | 5.53 |
| Circularity coefficient | 0.86 | 0.74 |
| Corrosion weight loss (µg/cm²) | 625 | 2200 |

As is clear from Table II, Sample No. 1 had a microstructure in which rounded fine grains of an intermetallic compound were dispersed and Sample No. 130 had a totally different microstructure in which odd-form coarse grains were sparsely dispersed. In addition, cavities were substantially not observed in Sample No. 1 whereas there were many large cavities in the cast sheet of Sample No. 130.

As is obvious from the results, a sheet composed of a magnesium alloy that has a high content of A1 in a certain range and has a microstructure in which fine grains of an intermetallic compound are uniformly dispersed and the area percentage is 11 area% or less has high impact resistance. It is also found that the sheet having such a microstructure has high corrosion resistance.

Furthermore, when the polished coil stock of Sample No. 1 was subjected to warm pressing (heating temperature of raw material: 250°C) to produce a pressed component (formed component) having an angular U-shaped cross section, the press forming could be successfully performed without causing cracking or the like. The microstructure of a flat portion, of the pressed component, that was not subjected to drawing was observed in the same manner as that of the polished coil stock. It was confirmed that the microstructure of the flat portion was substantially the same as that of a sheet constituting the polished coil stock. In other words, the pressed component was composed of a magnesium alloy having a microstructure in which fine grains of an intermetallic compound were uniformly dispersed and there were no coarse cavities. The pressed component had strength higher than that of the sheet because of plastic hardening. Therefore, when the above-described test piece is produced from the flat portion of the pressed component and the impact resistance test is performed as described above, the test piece has a larger fall height H at which a dent is not generated and thus has higher impact resistance. It is expected that impact-resistant components such as reinforcements and bumper faces produced by subjecting a sheet composed of a magnesium alloy having the above-described composition and microstructure to warm pressing have high impact resistance and a larger energy absorption amount.

The above-described embodiments can be suitably modified without departing from the sprit of the present invention and are not limited to the above-described configurations. For example, the composition of the magnesium alloy (particularly Al content) and the thickness, size, and production conditions of the magnesium alloy sheet serving as a raw material can be suitably changed.

### Industrial Applicability

The impact-resistant component of the present invention can be suitably used as components that require impact resistance in various fields, e.g., parts of automobiles such as bumper components, exterior components such as housings and covers, skeletal components, and exterior components for products that may be dropped in use, such as bags and fire extinguishers.

### Reference Signs List

- 10: test piece
- 11: edge of long side
- 12: cutout
- 13: hole for fixing
- 21, 22: supports
- 23: bolt
- 30: iron ball

## Claims

1. An impact-resistant component comprising:
a magnesium alloy containing Al in an amount of more than 7.3% by mass and 12% or less by mass,
wherein when a fall height at which a dent is not generated is measured by performing an impact resistance test below, the fall height is more than 340 mm,
(impact resistance test)
a test piece having a thickness of 0.6 mm, a length of 100 mm, and a width of 70 mm is prepared from the impact-resistant component; an iron ball having a mass of 225 g is allowed to freely fall toward a central portion of the test piece while both end portions of the test piece are fixed; and, when a distance between a position from which the iron ball is allowed to freely fall and the test piece is assumed to be a fall height (mm), a fall height at which a dent is not generated on the test piece by the iron ball is measured.

2. The impact-resistant component according to Claim 1,
wherein grains of an intermetallic compound containing at least one of Al and Mg are dispersed in the magnesium alloy;
an average grain size of the grains of the intermetallic compound is 0.5 µm or less; and
in a cross section of the impact-resistant component, a total area percentage of the grains of the intermetallic compound is more than 0% and 11% or less.

3. The impact-resistant component according to Claim 2, wherein, in the cross section of the impact-resistant component, the number of the grains of the intermetallic compound is 0.1 /µm² or more.

4. The impact-resistant component according to any one of Claims 1 to 3,
wherein the impact-resistant component is a formed component formed by subjecting a sheet composed of the magnesium alloy to plastic forming and has a flat portion that is not subjected to drawing; and
the test piece is cut out from the flat portion.

5. The impact-resistant component according to any one of Claims 1 to 4, wherein, in the cross section of the impact-resistant component, the maximum diameter of a cavity is 5 µm or less.

6. The impact-resistant component according to any one of Claims 1 to 5, wherein the magnesium alloy contains 8.3% or more by mass and 9.5% or less by mass of Al and 0.5% or more by mass and 1.5% or less by mass of Zn.

7. The impact-resistant component according to any one of Claims 1 to 6, wherein the impact-resistant component is a bumper component.
